# EUROPÄISCHE PATENTSCHRIFT

(11) **EP 3 431 891 B1**
(45) Veröffentlichungstag und Bekanntmachung des Hinweises auf die Patenterteilung: **02.11.2022**
(21) Anmeldenummer: 18180046.7
(22) Anmeldetag: 27.06.2018
(51) Int. Cl.: F24F 6/02, F24F 3/14, G01N 17/00

(54) **BEFEUCHTER UND VERFAHREN ZUR KONDITIONIERUNG VON LUFT**
HUMIDIFIER AND METHOD FOR CONDITIONING OF AIR
HUMIDIFICATEUR ET PROCÉDÉ DE CONDITIONNEMENT D'AIR

(30) Priorität: 19.07.2017 DE 102017212412
(43) Veröffentlichungstag der Anmeldung: 23.01.2019
(73) Patentinhaber: Weiss Technik GmbH, 35447 Reiskirchen (DE)
(72) Erfinder: HAACK, Christian, 35037 Marburg (DE); SCHLOSSER, Volker, 35305 Grünberg (DE); BITZER, Jürgen, 72336 Balingen (DE); TEICHMANN, Johannes, 72351 Geislingen (DE); SALAMON, Bojan, 72458 Albstadt (DE)
(74) Vertreter: advotec.

(56) Entgegenhaltungen:
- DE-A1- 10 259 170
- DE-U1-202011 004 938
- JP-A- S58 217 134
- US-A- 3 987 133

## Beschreibung

Die Erfindung betrifft einen Befeuchter für eine Prüfkammer, eine Prüfkammer sowie ein Verfahren zur Konditionierung von Luft eines Prüfraums einer Prüfkammer, insbesondere Klimakammer oder dergleichen, wobei der Befeuchter einen Behälter mit einem Behälterinnenraum zur Aufnahme eines Wasserbades, eine Heizeinrichtung einer Temperiervorrichtung zur Temperierung des Wasserbades, und eine Belüftungsvorrichtung zur Erzeugung von Luftblasen im Wasserbad, aufweist, wobei oberhalb des Wasserbades in dem Behälter eine Behälteröffnung zur Verbindung des Behälterinnenraums mit einem Prüfraum einer Prüfkammer ausgebildet ist.

Prüfkammern werden regelmäßig zur Überprüfung von physikalischen und/oder chemischen Eigenschaften von Gegenständen, insbesondere Vorrichtungen, eingesetzt. So sind Temperaturprüfschränke oder Klimaprüfschränke bekannt, innerhalb derer Temperaturen in einem Bereich von -50 °C bis +180 °C eingestellt werden können. Bei Klimaprüfschränken können ergänzend gewünschte Klimabedingungen eingestellt werden, denen dann die Vorrichtung beziehungsweise das Prüfgut über einen definierten Zeitraum ausgesetzt wird. Derartige Prüfkammern sind regelmäßig beziehungsweise teilweise als ein mobiles Gerät ausgebildet, welches lediglich mit erforderlichen Versorgungsleitungen mit einem Gebäude verbunden ist und alle zur Temperierung und Klimatisierung erforderlichen Baugruppen umfasst. Eine Temperierung eines das zu prüfende Prüfgut aufnehmenden Prüfraums erfolgt regelmäßig in einem Umluftkanal innerhalb des Prüfraums. In dem Umluftkanal sind ein oder mehrere Wärmetauscher zur Erwärmung oder Kühlung der den Umluftkanal beziehungsweise den Prüfraum durchströmenden Luft angeordnet. Dabei saugt ein Lüfter beziehungsweise ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfintervalls kann dann beispielsweise eine Temperatur zwischen einem Temperaturmaximum und einem Temperaturminimum der Prüfkammer wechseln.

Weiter ist regelmäßig vorgesehen, eine relative Luftfeuchte innerhalb des Prüfraums während eines Prüfintervalls einzustellen beziehungsweise die im Prüfraum befindliche Luft hinsichtlich ihrer relativen Feuchte zu konditionieren. Neben einer Entfeuchtung des Prüfraums über beispielsweise einen Kondensator wird daher ein im Klimaprüfschrank verbauter Befeuchter eingesetzt. Hier sind insbesondere Befeuchter bekannt, die innerhalb des Prüfraums in Art einer wannenartigen Vertiefung in einem Boden des Prüfraums ausgebildet sind. Die wannenartige Vertiefung weist dann ein Heizelement auf, mit dem in die Vertiefung eingefülltes Wasser erwärmt oder verdampft werden kann. Darüber hinaus kann auch ein Ablauf in der wannenartigen Vertiefung vorgesehen sein, über den das Wasser bei Bedarf abgelassen werden kann. Nachteilig ist hier, dass das innerhalb des Prüfraums befindliche Wasser Schadstoffe aus Prüflingen aufnehmen kann, was wiederum zu einer Korrosion von Bauteilen des Befeuchters, wie beispielsweise einem Heizelement, führen kann. Darüber hinaus kann das Wasser nicht während eines Prüfzyklus, sondern erst danach aus dem Prüfraum abgelassen werden, um den Prüfzyklus nicht zu beeinflussen. Eine Beeinflussung eines Prüfzyklus ist jedoch auch bei ausgeschalteter Befeuchterfunktion aufgrund des Wassers zumindest im geringen Maße nicht zu vermeiden. Gerade auch Prüfzyklen mit Temperaturwechseln bis unter einen Gefrierpunkt erfordern ein Ablassen des in der Wanne befindlichen Wassers. Diese Art von Befeuchtern ist vergleichsweise kostenaufwendig herzustellen, da für verschiedene Prüfkammergrößen stets entsprechend angepasste Befeuchter im Boden des betreffenden Prüfraums auszubilden sind.

Die DE 10 259 170 A1 schlägt einen Befeuchter vor, der aus einem von einem Prüfraum separierten Behälter, welcher mit einem Wasserbad gefüllt ist, ausgebildet ist. Innerhalb des Wasserbades befindet sich eine Temperiervorrichtung zur Erwärmung des Wasserbades sowie unterhalb der Temperiervorrichtung ein sogenannter Perlator zur Erzeugung von Luftblasen in dem Wasserbad. Zur Befeuchtung von Luft in einem Prüfraum ist vorgesehen, das Wasserbad mit einer Temperatur von 50 °C bis 80 °C zu temperieren und Luft in den Prüfraum einzuleiten, die in Form von Luftblasen im Wasserbad aufsteigt. Die Luft ist dabei insbesondere aerosolfrei, sodass keine Dampfbefeuchtung des Prüfraums erfolgt. Vorteilhaft ist hier insbesondere, dass im Prüfraum kein Wasserbad vorgehalten werden muss, und dass keine Kontamination des Wasserbades mit beispielsweise Schadstoffen erfolgen kann. Die DE 102 59 170 A1 offenbart damit einen Befeuchter mit den Merkmalen des Oberbegriffs von Anspruch 1 sowie ein Verfahren mit den Merkmalen des Oberbegriffs von Anspruch 12.

Nachteilig bei dem bekannten Befeuchter ist, dass eine Befeuchtung aufgrund der im Behälter befindlichen Wassermenge nur sehr träge regelbar ist. Eine hohe Feuchtekonstanz oder auch ein schneller Wechsel einer Lufttemperatur beziehungsweise einer relativen Luftfeuchte in dem Prüfraum im Rahmen eines Prüfintervalls kann daher mit dem Befeuchter nicht realisiert werden. Gerade auch ein Absenken einer Lufttemperatur im Prüfraum erfordert eine Entfeuchtung der Luft im Prüfraum mit beispielsweise einem Entfeuchter.

Die US 3,987,133 A beschreibt einen Befeuchter mit einer Heizung, welcher eine Prüfkammer mit befeuchteter Luft versorgen kann. Die Heizung befindet sich innerhalb des flüssigen Mediums.

Aus der DE 20 2011 004 938 U1 geht eine Vorrichtung zur Luftbefeuchtung bzw. Luftentfeuchtung unter Nutzung von Wasserflächen hervor. Ein Wasserstrahl wird warm oder kalt temperiert, sodass die ihn berührende Luft daran befeuchtet (warmes Wasser) oder entfeuchtet (kaltes Wasser) wird. Das Wasser wird durch ein Temperiergerät erwärmt oder gekühlt.

Auch die JP S58 217134 A betrifft ein beheizbares Wasserbad.

Der vorliegenden Erfindung liegt daher die Aufgabe zugrunde, einen Befeuchter für eine Prüfkammer und ein Verfahren zur Konditionierung von Luft eines Prüfraums einer Prüfkammer vorzuschlagen, welcher beziehungsweise welches auch bei sich schnell ändernden Prüfbedingungen eine hohe Konstanz einer relativen Luftfeuchte in einem Prüfraum ermöglicht.

Diese Aufgabe wird durch einen Befeuchter mit den Merkmalen des Anspruchs 1, eine Prüfkammer mit den Merkmalen des Anspruchs 10 und ein Verfahren mit den Merkmalen des Anspruchs 12 gelöst.

Der erfindungsgemäße Befeuchter für eine Prüfkammer, insbesondere Klimakammer, weist einen Behälter mit einem Behälterinnenraum zur Aufnahme eines Wasserbades, eine Heizeinrichtung einer Temperiervorrichtung zur Temperierung des Wasserbades, und eine Belüftungsvorrichtung zur Erzeugung von Luftblasen im Wasserbad, auf, wobei oberhalb des Wasserbades in dem Behälter eine Behälteröffnung zur Verbindung des Behälterinnenraums mit einem Prüfraum einer Prüfkammer ausgebildet ist, wobei der Befeuchter eine Kühleinrichtung der Temperiervorrichtung aufweist, wobei die Heizeinrichtung und die Kühleinrichtung jeweils mit einem in dem Wasserbad angeordneten Wärmetauscher ausgebildet sind.

Der Behälter des Befeuchters ist im Wesentlichen geschlossen und temperaturisoliert und die Heizeinrichtung ist in dem Wasserbad angeordnet, sodass das Wasserbad mittels der Heizeinrichtung erwärmt werden kann. Die Behälteröffnung dient zur dichten Verbindung mit einem Prüfraum, sodass befeuchtete Luft aus dem Behälter über beispielsweise einen Luftkanal oder Schlauch in einen Prüfraum eingeleitet werden kann. Der Befeuchter ist so prinzipiell unabhängig von einer Größe einer Prüfkammer beziehungsweise eines Prüfraums modular ausbildbar. Auch ist es dann nicht mehr erforderlich, innerhalb eines Prüfraums individuell angepasste Befeuchter auszubilden, weshalb der erfindungsgemäße Befeuchter besonders kostengünstig herstellbar ist. Dadurch, dass der Befeuchter die in dem Wasserbad angeordnete Kühleinrichtung der Temperiervorrichtung aufweist, wird es möglich, das Wasserbad so zu temperieren, dass es eine vergleichsweise niedrige Temperatur aufweist. Hierdurch können schnelle Temperaturwechsel des Befeuchters beziehungsweise des Wasserbades und damit befeuchtete, aerosolfreie Luft mit einer beliebigen Taupunkttemperatur erzeugt werden. Darüber hinaus kann auch eine Entfeuchtung des Prüfraums mittels des Befeuchters durchgeführt werden.

Durch die nunmehr mögliche Kühlung des Wasserbades kann eine genaue zeitliche Konstanz einer relativen Luftfeuchte in dem Prüfraum erzielt werden, da die Temperatur des Wasserbades auch schnell abgesenkt und damit vergleichsweise genau geregelt werden kann. Weiter kann eine sehr niedrige Temperatur des Wasserbades mittels der Kühleinrichtung eingestellt werden, sodass dann vergleichsweise kalte, aerosolfreie Luft in den Prüfraum gefördert werden kann. Eine Erwärmung dieser Luft in dem Prüfraum führt zu einer Verminderung einer relativen Luftfeuchte innerhalb des Prüfraums und damit auch zu einer Entfeuchtung desselben. Hier kann insbesondere vorgesehen sein, Luft über ein Auslassventil im Prüfraum aus diesem auszuleiten, sodass eine besonders schnelle Entfeuchtung mit einem Austrag von gegebenenfalls in der Luft befindlichen Schadstoffen erfolgen kann. Neben der hohen zeitlichen Konstanz einer relativen Luftfeuchte im Prüfraum ist folglich auch ein schneller Wechsel einer Taupunkttemperatur im Prüfraum möglich. Der erfindungsgemäße Befeuchter ist aufgrund seines modularen Aufbaus für verschiedenste Prüfkammern verwendbar.

Erfindungsgemäß sind die Heizeinrichtung und die Kühleinrichtung jeweils mit einem in dem Wasserbad angeordneten Wärmetauscher ausgebildet. Der Wärmetauscher der Heizeinrichtung kann beispielsweise ein elektrischer Heizstab oder auch ein mit einem Wärmeträgermedium durchströmtes Rohr sein. Die Kühleinrichtung kann ebenfalls ein mit einem Wärmeträgermedium beziehungsweise mit einem Kältemittel durchströmtes Rohr innerhalb dem Wasserbad sein. Das Rohr kann beispielsweise in Art einer Schlange, spiralförmig oder wendelförmig ausgebildet sein, sodass ein möglichst guter Wärmeübergang von der Heizeinrichtung beziehungsweise der Kühleinrichtung zu dem Wasserbad erzielbar ist.

Der Heizeinrichtung und der Kühleinrichtung können jeweils eine Belüftungseinrichtung der Belüftungsvorrichtung räumlich zugeordnet sein. Diese Belüftungseinrichtungen können dann jeweils in dem Wasserbad angeordnet sein. Die jeweiligen Belüftungseinrichtungen können unterhalb der Heizeinrichtung beziehungsweise der Kühleinrichtung angeordnet sein, sodass mit den Belüftungseinrichtungen erzeugte Luftblasen im Bereich der Heizeinrichtung beziehungsweise der Kühleinrichtung in dem Wasserbad aufsteigen können. So wird es möglich, eine möglichst direkte Beeinflussung der Luft in dem Behälterinnenraum über die Heizeinrichtung beziehungsweise die Kühleinrichtung zu erzielen. Auch können die Belüftungseinrichtungen voneinander separiert sein, sodass ein getrennter Betrieb der Belüftungseinrichtungen beziehungsweise eine voneinander unabhängige Erzeugung von Luftblasen in dem Wasserbad erfolgen kann. Die Belüftungsvorrichtung kann weiter zumindest eine Pumpe aufweisen, mittels der die Belüftungseinrichtungen mit Luft versorgt werden können. Dabei kann auch eine Luftmenge auf die Belüftungseinrichtungen unterschiedlich verteilt werden. So kann beispielsweise zunächst die Heizeinrichtung zur Erzeugung von warmer, gesättigter Luft betrieben und mit Luftblasen über die räumlich zugeordnete Belüftungseinrichtung versorgt werden. Ist im Rahmen eines Prüfintervalls eine Abkühlung eines Prüflings beziehungsweise von Luft im Prüfraum vorgesehen, kann nachfolgend eine Abkühlung des Wasserbades durch einen Betrieb der Kühleinrichtung erfolgen, wobei dann die Kühleinrichtung von Luftblasen der zugeordneten Belüftungseinrichtung umströmt wird, sodass vergleichsweise kalte, gesättigte Luft für den Prüfraum erzeugt werden kann.

Die jeweiligen Belüftungseinrichtungen können eine Druckluftleitung mit einem Luftauslass aufweisen, wobei jeweils eine poröse Membran den Luftauslass ausbilden kann, wobei die poröse Membran jeweils unterhalb der Heizeinrichtung und der Kühleinrichtung angeordnet sein kann. Die poröse Membran kann beispielsweise aus einem porösen keramischen Material in Art eines sogenannten Perlators ausgebildet sein. Die Druckluftleitung kann ein Rohr oder ein Schlauch sein, der eine Pumpe zur Förderung von Luft beziehungsweise zur Erzeugung von Druckluft mit einer Belüftungseinrichtung verbindet. Durch die Verwendung der porösen Membran wird es möglich, eine große Anzahl von Luftblasen gleichzeitig zu erzeugen und damit auch eine besonders große Oberfläche des Wasserbades im Bereich der Heizeinrichtung und/oder der Kühleinrichtung auszubilden. Mit Wasser gesättigte Luft beziehungsweise Luft mit einer bestimmten Taupunkttemperatur kann so vergleichsweise schnell in großer Menge erzeugt und zu einem Prüfraum geleitet werden.

Vorteilhaft kann die poröse Membran scheibenförmig ausgebildet sein. Die poröse Membran kann unterhalb der Heizeinrichtung und der Kühleinrichtung relativ zu einem Wasserspiegel des Wasserbades so angeordnet sein, dass die Heizeinrichtung beziehungsweise die Kühleinrichtung zumindest vollständig von den Luftblasen umgeben werden kann. Mit der scheibenförmigen, porösen Membran können dann auf einer großen Fläche bei gleichzeitig einer geringen Bauhöhe der porösen Membran Luftblasen erzeugt werden.

Der Befeuchter kann eine Strömungsvorrichtung aufweisen, wobei die Strömungsvorrichtung einen im Behälter angeordneten Kanal aufweisen kann, dessen oberes Ende und dessen unteres Ende offen ausgebildet sein können, wobei der Wärmetauscher dann in dem Kanal angeordnet sein kann. Folglich kann die Strömungsvorrichtung in Art eines vertikal angeordneten Schachtes in dem Wasserbad positioniert sein, sodass der Wärmetauscher der Heizeinrichtung und/oder der Kühleinrichtung innerhalb der Strömungsvorrichtung beziehungsweise des Kanals angeordnet sein kann. Insbesondere wenn eine Erzeugung von Luftblasen mittels der Belüftungsvorrichtung unterhalb des jeweiligen Wärmetauschers erfolgt, können die Luftblasen dann den Kanal durchströmen und damit mit den jeweiligen Wärmetauscher umgeben. Auch kann mittels der Strömungsvorrichtung dann sichergestellt werden, dass im Wesentlichen das innerhalb der Strömungsvorrichtung beziehungsweise dem Kanal befindliche Wasser des Wasserbades von dem jeweiligen Wärmetauscher erhitzt oder gekühlt wird. Die dann durch den Kanal hindurch strömenden Luftblasen werden so gezielt durch das erhitzte oder gekühlte Wasser hindurch geleitet, was eine besonders schnelle Erzeugung gesättigter Luft mit der gewünschten Taupunkttemperatur ermöglicht. Insbesondere ist es dann auch nicht mehr erforderlich, das gesamte Wasserbad vollständig auf die gewünschte Temperatur zur Erzeugung der gesättigten Luft zu erbringen, sondern es ist bereits ausreichend, nur das innerhalb des Kanals befindliche Wasser zu temperieren. Das außerhalb des Kanals befindliche Wasser dient dann lediglich als eine Verdampfungsreserve und kann nach Bedarf in den Kanal einströmen. Der Kanal kann so groß ausgebildet sein, dass ein Innenvolumen des Kanals im Verhältnis zu einem Gesamtvolumen des Wasserbades 1:5, 1:10 oder größer ist. Dadurch, dass die Luftblasen in dem Kanal aufsteigen können, kann auch ein Einfrieren des Wärmetauschers der Kühleinrichtung einfach verhindert werden. Wenn ein besonders gut kühlbarer Wärmetauscher verwendet wird, kann Wasser an der Oberfläche des Wärmetauschers gefrieren, was dazu führt, dass der Befeuchter außer Betrieb genommen und abgetaut werden muss. Wenn die aufsteigenden Luftblasen eine turbulente Strömung im Bereich einer Oberfläche des Wärmetauschers erzeugen, kann eine Eisbildung an der Oberfläche einfach verhindert werden.

So kann der Kanal von einem Hohlprofil in Art eines Rohrs ausgebildet sein, wobei eine Oberkante des oberen Endes oberhalb eines Wasserspiegels des Wasserbades angeordnet sein kann. Folglich kann der Wasserspiegel auch so weit angehoben sein, dass die Oberkante stets oberhalb des Wasserspiegels liegt beziehungsweise aus dem Wasserbad herausragt. Je nach der mit der Belüftungsvorrichtung eingeblasenen Luftmenge bewirken die Luftblasen innerhalb des Hohlprofils ein Anheben des Wasserspiegels in dem Hohlprofil relativ zu dem Wasserspiegel in dem übrigen Behälterinnenraum beziehungsweise einer Restwassermenge des Wasserbades. Die Luftblasen bewirken ein "Aufschäumen" des Wasserspiegels einer im Kanal befindlichen Teilwassermenge des Wasserbades. Insbesondere kann dann der Wasserspiegel auch so hoch angehoben werden, dass Wasser des Wasserbades beziehungsweise der Teilwassermenge über die Oberkante aus dem Hohlprofil heraus tritt und sich mit der Restwassermenge des Wasserbades außerhalb des Hohlprofils mischt. Je nach Dosierung einer Luftmenge kann dann auch eine schnelle Durchmischung des Wasserbades mit durch die Wärmetauscher erzeugtem warmen und/oder kalten Wasser durchgeführt werden, um eine Durchschnittstemperatur des Wasserbades beziehungsweise einer Gesamtwassermenge anzuheben oder abzusenken.

Vorteilhaft ist es, wenn der Wärmetauscher der Heizeinrichtung und der Wärmetauscher der Kühleinrichtung jeweils innerhalb des Hohlprofils angeordnet ist. Folglich kann dann der Heizeinrichtung und der Kühleinrichtung jeweils ein Hohlprofil zugeordnet sein. Dann wird es beispielsweise auch möglich, den jeweiligen Wärmetauscher der Heizeinrichtung und der Kühleinrichtung gleichzeitig mit Luftblasen zu versorgen beziehungsweise zu umströmen. So kann während eines Ausklingens einer Beheizungsphase bereits eine Kühlphase eingeleitet, und so ein schneller Wechsel einer Befeuchterfunktion verwirklicht werden. Der Kanal kann derart ausgebildet und Belüftungseinrichtungen der Belüftungsvorrichtung jeweils unterhalb oder innerhalb des Kanals angeordnet sein, dass ein Aufsteigen von Luftblasen in dem Wasserbad überwiegend, bevorzugt ausschließlich innerhalb des Kanals, erfolgt.

Weiter kann der Befeuchter einen Füllstandsensor, ein Zulaufventil und ein Ablaufventil aufweisen. Über das Zulaufventil kann Wasser in den Behälterinnenraum dosiert werden, wobei über das Ablaufventil Wasser nach Bedarf aus dem Behälterinnenraum abgelassen werden kann. Der Füllstandsensor kann zusammen mit einer Regeleinrichtung zur konstanten Regelung einer Höhe eines Wasserspiegels in dem Behälterinnenraum genutzt werden. Insbesondere wenn Wasser mit gesättigter Luft aus dem Behälterinnenraum ausgetragen wird, kann ein Wasserverlust durch Nachdosieren mit dem Zulaufventil ausgeglichen werden. Um eine gegebenenfalls erforderliche Reinigung des Behälterinnenraums beziehungsweise des Befeuchters aufgrund von Rückständen in dem Wasser zu vermeiden, kann demineralisiertes Wasser für das Wasserbad verwendet werden.

Die erfindungsgemäße Prüfkammer zur Konditionierung von Luft umfasst einen gegenüber einer Umgebung verschließbaren und temperaturisolierten Prüfraum zur Aufnahme von Prüfgut sowie einen erfindungsgemäßen Befeuchter. Weitere vorteilhafte Ausführungsformen einer Prüfkammer ergeben sich aus den auf den Vorrichtungsanspruch 1 rückbezogenen Unteransprüchen.

Eine besonders hohe zeitliche Konstanz einer relativen Feuchte kann mit dem Befeuchter erzielt werden, wenn der Befeuchter eine Regeleinrichtung mit einem Prüfkammerregelkreis und einem Befeuchterregelkreis aufweist, wobei der Prüfkammerregelkreis einen Feuchtesensor zur Messung einer relativen Luftfeuchte in dem Prüfraum aufweisen und zur Feuchteregelung in dem Prüfraum dienen kann, wobei der Befeuchterregelkreis einen Temperatursensor zur Messung der Temperatur in dem Wasserbad und/oder einen Feuchtesensor, bevorzugt einen Taupunktsensor, zur Messung einer relativen Luftfeuchte in dem Behälterinnenraum aufweisen kann, und dann zur Feuchteregelung und/oder Temperaturregelung in dem Behälterinnenraum dienen kann, wobei die Regeleinrichtung als eine Kaskadenregelung mit dem Prüfkammerregelkreis als ein Führungsregler und dem Befeuchterregelkreis als ein Folgeregler ausgebildet sein kann. Die dann so ausgebildete Kaskadenregelung ermöglicht neben einer verbesserten, absoluten Genauigkeit des Befeuchters hinsichtlich der befeuchteten Luft in dem Prüfraum auch eine schnellere Reaktion beziehungsweise ein zeitlich schnelleres Ansprechverhalten des Befeuchters und damit eine dynamischere Steuerung von Prüfintervallen. So kann beispielsweise eine Absenkung einer relativen Luftfeuchte in einem Prüfraum durch Erzeugung einer zunächst stark unterkühlten, tiefen Wassertemperatur in den Befeuchter eingeleitet werden und umgekehrt. Eine Anpassung der betreffenden Wassertemperatur und geförderten Luftmenge kann mit dem Befeuchterregelkreis gleitend erfolgen. Bei dem erfindungsgemäßen Verfahren zur Konditionierung von Luft eines Prüfraums einer Prüfkammer, insbesondere Klimakammer, mit einem Befeuchter, wird in einem Behälterinnenraum eines Behälters des Befeuchters ein Wasserbad aufgenommen, wobei mittels einer Heizeinrichtung einer Temperiervorrichtung des Befeuchters eine Temperierung des Wasserbades erfolgt, wobei mittels einer Belüftungsvorrichtung des Befeuchters Luftblasen in dem Wasserbad erzeugt werden, wobei oberhalb des Wasserbades eine in dem Behälter ausgebildete Behälteröffnung den Behälterinnenraum mit einem Prüfraum einer Prüfkammer verbindet, wobei mittels einer Kühleinrichtung der Temperiervorrichtung des Befeuchters eine Temperierung des Wasserbades erfolgt, wobei die Heizeinrichtung und die Kühleinrichtung jeweils mit einem in dem Wasserbad angeordneten Wärmetauscher ausgebildet sind.

Zu den vorteilhaften Wirkungen des erfindungsgemäßen Verfahrens wird auf die Vorteilsbeschreibung des erfindungsgemäßen Befeuchters verwiesen. Demnach erfolgt eine ergänzende Temperierung des Wasserbades mittels der Kühleinrichtung, was eine schnelle Abkühlung des Wasserbades und damit eine Erzeugung gesättigter Luft mit einer vergleichsweise niedrigeren Taupunkttemperatur ermöglicht.

Das Wasserbad kann mittels der Heizeinrichtung und der Kühleinrichtung in einem Temperaturbereich von 2 °C bis 100 °C, bevorzugt von 10 °C bis 100 °C temperiert werden. Gerade eine niedrige Wassertemperatur kann dazu genutzt werden, den Prüfraum beziehungsweise dessen Luftfeuchte innerhalb eines Prüfintervalls auch bei niedrigen Lufttemperaturen anzupassen beziehungsweise gezielt zu regeln. Weiter kann kalte Luft auch zur Entfeuchtung des Prüfraums genutzt werden. Umgekehrt ist es möglich das Wasserbad soweit zu erhitzen, dass das Wasser kocht und der Befeuchter dann in Art eines Dampferzeugers genutzt werden kann. Dadurch, dass über die Belüftungsvorrichtung des Befeuchters Luftblasen in dem Wasserbad erzeugt werden, wird über beispielsweise eine Pumpe der Belüftungsvorrichtung dem Behälterinnenraum stetig Luft zugeführt. Diese Luft kann dann über beispielsweise einen Luftkanal oder einen Schlauch in den Prüfraum eingeleitet werden, wobei ein Transport der Luft über eine Partialdruckdifferenz zwischen Behälterinnenraum und Prüfraum erfolgen kann. Optional ist es natürlich auch möglich, mit beispielsweise einem Ventilator gezielt eine Luftströmung von dem Behälterinnenraum in dem Prüfraum auszubilden.

Ein Wärmetauscher der Heizeinrichtung und ein Wärmetauscher der Kühleinrichtung können jeweils in einem Kanal einer Strömungsvorrichtung des Befeuchters in dem Wasserbad angeordnet sein, wobei innerhalb des jeweiligen Kanals eine Teilwassermenge einer Gesamtwassermenge des Wasserbades mittels des jeweiligen Wärmetauschers temperiert werden kann. Die Teilwassermenge kann ein Fünftel, ein Zehntel oder weniger der Gesamtwassermenge beziehungsweise einer Restwassermenge des Wasserbades betragen. So ist es bereits ausreichend, einen Bruchteil der Gesamtwassermenge zu temperieren, um gesättigte, aerosolfreie Luft mittels der Luftblasen in dem Wasserbad zu erzeugen. Durch die Temperierung der jeweiligen Teilwassermenge kann eine Ansprechgeschwindigkeit beziehungsweise eine Dynamik des Befeuchters bei einer Konditionierung von Luft wesentlich verbessert werden.

Folglich kann die Teilwassermenge mit einer von einer Restwassermenge der Gesamtwassermenge wesentlich abweichenden Temperatur temperiert werden. Wenn dies erforderlich sein sollte, kann auch durch eine mittels der Belüftungsvorrichtung initiierte Durchmischung der Teilwassermenge mit der Restwassermenge ein Temperaturausgleich von der Teilwassermenge mit der Restwassermenge schnell erzielt werden.

Es kann vorgesehen sein, mittels der Belüftungsvorrichtung eine Menge von Luftblasen zu erzeugen, die innerhalb eines Hohlprofils des Kanals in dem Wasserbad aufsteigen, wobei dann eine Oberkante des Hohlprofils oberhalb eines Wasserspiegels des Wasserbades angeordnet sein kann. Die Luftblasen steigen dann im Wesentlichen alleine in der Teilwassermenge, die temperiert wird, auf, sodass im Wesentlichen alleine die temperierte Teilwassermenge zur Erzeugung der gesättigten Luft verwendet werden kann.

Die Luftblasen können in der Teilwassermenge aufsteigen und den Wasserspiegel innerhalb des Hohlprofils relativ zu dem Wasserspiegel außerhalb des Hohlprofils erhöhen. Solange eine Erhöhung des Wasserspiegels innerhalb des Hohlprofils die Oberkante des Hohlprofils nicht übersteigt, kann eine Durchmischung der Teilwassermenge mit der Restwassermenge weitestgehend ausgeschlossen werden. Je nach eingestellter Temperatur der Wassermenge kann auch eine Taupunkttemperatur der über die Luftblasen entweichenden Luft beziehungsweise Luftmenge sehr genau eingestellt werden. So ist es möglich, eine sehr hohe zeitliche Konstanz der relativen Luftfeuchte im Prüfraum über die Zuleitung eines gesättigten Luftstroms in den Prüfraum sicherzustellen.

Die Luftblasen können auch in der Teilwassermenge aufsteigen und die Teilwassermenge über die Oberkante des Hohlprofils aus dem Hohlprofil hinaus fördern, derart, dass eine Mischung der Teilwassermenge mit einer Restwassermenge der Gesamtwassermenge erfolgen kann. Durch die Mischung mit der Restwassermenge kann dann eine sehr schnelle Temperaturabsenkung der Teilwassermenge oder umgekehrt durchgeführt werden. Insbesondere, wenn die Teilwassermenge im Vergleich zur Restwassermenge im Verhältnis wesentlich kleiner ist, kann eine Temperatur der Teilwassermenge im Wesentlichen einer Temperatur der Restwassermenge in nur wenigen Sekunden angepasst werden. Je nach Intensität der Durchmischung, welche dann von einem Überströmen der Teilwassermenge über die Oberkante des Hohlprofils abhängig ist, kann diese langsam oder schnell erfolgen.

Es kann vorgesehen sein, dass aerosolfreie Luft, bevorzugt gesättigte aerosolfreie Luft, in einem Temperaturbereich von 2 °C bis 100 °C, bevorzugt von 10 °C bis 100 °C mittels der Temperaturvorrichtung und der Belüftungsvorrichtung erzeugt und durch die Behälteröffnung zu dem Prüfraum gefördert wird. Vorzugsweise herrscht dann in dem Behälterinnenraum ein Druck, der eine Erzeugung von Dampf verhindert. Weiter kann eine Anpassung einer Luftmenge in Abhängigkeit einer im Prüfraum geforderten Taupunkttemperatur erfolgen. Bei einer hohen, zu erreichenden Taupunkttemperatur kann eine mit der Belüftungsvorrichtung geförderte Luftmenge auf beispielsweise 0,1 m³/h bis 0,2 m³/h vermindert werden, um eine ausreichend konstante Regelung der Taupunkttemperatur zu erzielen.

Alternativ kann der Prüfraum auch über ein geöffnetes Überdruckventil in dem Prüfraum entfeuchtet werden, wobei dann aerosolfreie Luft in einem Temperaturbereich von 2 °C bis 30 °C, bevorzugt von 2 °C bis 10 °C mittels der Temperiervorrichtung und der Belüftungsvorrichtung erzeugt und durch die Behälteröffnung zu dem Prüfraum gefördert wird. Insbesondere wenn eine Lufttemperatur innerhalb des Prüfraums höher ist als eine Lufttemperatur der aerosolfreien Luft, kann diese noch Wasser aufnehmen und über das Überdruckventil aus dem Prüfraum abgeführt werden. Eine Kondensation vom Wasser in dem Prüfraum zur Entfeuchtung oder eine besondere Entlüftung ist dann nicht mehr erforderlich. Auch kann über dieses Verfahren der Entfeuchtung gezielt eine Taupunkttemperatur in dem Prüfraum sehr genau eingestellt werden.

In einer weiteren Ausführungsform des Verfahrens kann aerosolhaltige Luft, insbesondere Dampf, mittels des Wärmetauschers der Heizeinrichtung durch Sieden beziehungsweise Kochen der Teilwassermenge mittels der Temperiervorrichtung und der Belüftungsvorrichtung erzeugt und durch die Behälteröffnung zu dem Prüfraum gefördert werden. Ein Austrag von Dampf aus der Teilwassermenge kann durch die Erzeugung von Luftblasen in der Teilwassermenge noch weiter befördert werden. Prinzipiell ist es jedoch auch möglich, den Befeuchter als einen drucklosen Dampfbefeuchter zu nutzen und auf eine Erzeugung von Luftblasen zu verzichten. Durch die Zuleitung von Dampf in den Prüfraum kann eine sehr hohe Befeuchterleistung erzielt werden. Diese Verfahrensvariante kann vorteilhaft für Taupunkttemperaturen von ≥ +12 °C eingesetzt werden. Besonders vorteilhaft ist auch eine Verwendung der verschiedenen Verfahrensvarianten in einer Abfolge, beispielsweise durch Ausbilden von Dampf zur Erzielung einer hohen relativen Luftfeuchte im Prüfraum und einer nachfolgenden Förderung von aerosolfreier Luft in den Prüfraum zur Erhaltung und Regelung des gewünschten Niveaus der relativen Luftfeuchte. Bei dem Betrieb als druckloser Dampfbefeuchter können eventuelle Wasserverluste im Prüfraum alleine über eine Partialdampfdruckdifferenz ausgeglichen werden. Da die Belüftungsvorrichtung dann nicht in Betrieb sein muss, kann der Befeuchter besonders wasser- und energiesparend betrieben werden.

Eine Luftströmung von dem Behälterinnenraum zu dem Prüfraum kann mittels einer von der Belüftungsvorrichtung erzeugten Partialdruckdifferenz zwischen dem Behälterinnenraum und dem Prüfraum ausgebildet werden. Eine Fördermenge der Belüftungsvorrichtung beziehungsweise einer Pumpe der Belüftungsvorrichtung bestimmt dann den Luftstrom beziehungsweise eine Menge an in den Prüfraum eingeleitete Luft. Eine Regelung dieser Fördermenge kann neben einer Taupunkttemperatur der Luft zur Einstellung der relativen Luftfeuchte in dem Prüfraum dienen.

Eine Luftströmung kann von dem Behälterinnenraum zu dem Prüfraum in den Prüfraum an einem im Prüfraum befindlichen Ventilator eingeleitet werden. Beispielsweise wäre es dann auch möglich Dampf in den Prüfraum einzuleiten, ohne dass sich der Dampf an beispielsweise kalten Flächen im Prüfraum niederschlägt. Der Ventilator bewirkt eine intensive Durchmischung von im Prüfraum befindlicher Luft mit dem Dampf beziehungsweise der Luftströmung aus dem Behälterinnenraum, sodass ein Niederschlag von Dampf verhindert und eine relative Luftfeuchte beziehungsweise eine Taupunkttemperatur in dem Prüfraum rasch angehoben werden kann.

Vorteilhaft kann mittels einer Regeleinrichtung des Befeuchters eine, auf einen Zeitabschnitt bezogene, Feuchtekonstanz in dem Prüfraum mit einer Toleranz von < ±1 % relative Luftfeuchte geregelt werden.

Weitere vorteilhafte Ausführungsformen des Verfahrens ergeben sich aus den auf den unabhängigen Verfahrensanspruch 12 rückbezogenen Unteransprüchen. Nachfolgend werden bevorzugte Ausführungsformen der Erfindung unter Bezugnahme auf die beigefügten Zeichnungen näher erläutert.

Es zeigen:
- **Fig. 1a** bis **1b:**: eine schematische Schnittansicht einer ersten Ausführungsform eines Befeuchters in verschiedenen Betriebsmodi;
- **Fig. 2a** bis **2d:**: eine schematische Schnittansicht einer zweiten Ausführungsform eines Befeuchters in verschiedenen Betriebsmodi.

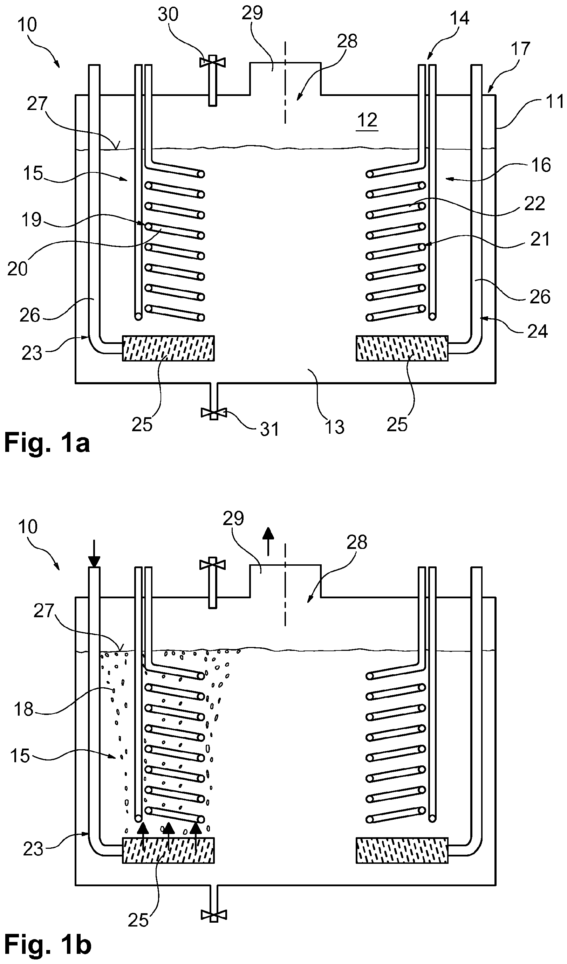

Eine Zusammenschau der **Fig. 1a** bis **1b** zeigt einen Befeuchter 10 für eine hier nicht dargestellte Prüfkammer beziehungsweise einen Prüfraum, wobei der Befeuchter 10 aus einem Behälter 11 mit einem Behälterinnenraum 12, in dem ein Wasserbad 13 aufgenommen ist, und einer Temperiervorrichtung 14, mit einer Heizeinrichtung 15 und einer Kühleinrichtung 16 zur Temperierung des Wasserbads 13, ausgebildet ist. Weiter umfasst der Befeuchter 10 eine Belüftungsvorrichtung 17 zur Erzeugung von Luftblasen 18 in dem Wasserbad 13.

Die Heizeinrichtung 15 umfasst eine Heizwendel 19 eines Widerstandsheizelements 20, wobei die Heizwendel 19 in dem Wasserbad 13 positioniert ist. Die Kühleinrichtung 16 weist eine Kühlwendel 21 auf, die aus einem Rohr 22 mit einem darin zirkulierenden Kältemittel ausgebildet ist. Die Kühlwendel 21 ist ebenfalls innerhalb des Wasserbades 13 angeordnet. Die Belüftungsvorrichtung 17 umfasst zwei Belüftungseinrichtungen 23 und 24, die der Heizeinrichtung 15 beziehungsweise der Kühleinrichtung 16 räumlich zugeordnet sind. Jede der Belüftungseinrichtungen 23 und 24 ist aus einer porösen Membran 25, welche scheibenförmig ausgebildet ist, und einer Druckluftleitung 26 ausgebildet. Die Druckluftleitungen 26 sind jeweils mit einer hier nicht dargestellten Pumpe der Belüftungsvorrichtung 17 verbunden und können getrennt voneinander mit Druckluft versorgt werden. Die jeweiligen porösen Membrane 25 sind unmittelbar unterhalb der Heizwendel 19 beziehungsweise der Kühlwendel 21 relativ bezogen auf einen Wasserspiegel 27 des Wasserbads 13 angeordnet.

In dem Behälter 11 ist eine Behälteröffnung 28 oberhalb des Wasserspiegels 27 ausgebildet, die in einen Luftkanal 29 übergeht, welcher den Behälter 11 mit dem hier nicht dargestellten Prüfraum verbindet. Ventile oder ähnliche Einrichtungen sind in dem Luftkanal 29 nicht vorgesehen, sodass der Luftkanal 29 den Behälterinnenraum 12 im Wesentlichen drucklos mit dem Prüfraum verbindet. Weiter umfasst der Befeuchter 10 einen hier nicht dargestellten Füllstandsensor sowie ein Zulaufventil 30 und ein Ablaufventil 31. Über das Zulaufventil 30 ist Wasser, insbesondere demineralisiertes Wasser, in den Behälterinnenraum 12 dosierbar, wobei mit dem Ablaufventil 31 Wasser des Wasserbads 13 aus dem Behälterinnenraum 12 abgelassen werden kann. Eine Höhe des Wasserspiegels 27 kann bei einem Wasserverlust infolge Verdampfen durch Zudosieren im Wesentlichen konstant gehalten werden. Weiter ist es möglich, das Wasserbad 13, zu beispielsweise Wartungszwecken, vollständig abzulassen.

Wie aus der **Fig. 1b** ersichtlich ist, bewirkt eine Beaufschlagung der porösen Membran 25 der Belüftungseinrichtung 24 mit Druckluft ein Aufsteigen von Luftblasen 18 in dem Wasserbad 13 von der porösen Membran 25 bis zu dem Wasserspiegel 27, wobei hier die Heizwendel 19 von den Luftblasen 18 eingehüllt beziehungsweise umgeben ist. Die über die Druckluftleitung 26 in den Behälterinnenraum 12 eingeleitete Luft strömt über die Behälteröffnung 28 wieder aus dem Behälterinnenraum 12 aus und gelangt in den Prüfraum. Da diese Luft in Form der Luftblasen 18 durch das Wasserbad 13 gelangt, wird die Luft entsprechend einer Temperatur des Wasserbades 13 temperiert und mit Wasser gesättigt, sodass die zu der Prüfkammer strömende Luft aerosolfrei ist. Durch eine Regelung der Temperiervorrichtung 14 und der Belüftungsvorrichtung 17 mit einer hier nicht dargestellten Regeleinrichtung des Befeuchters 10 ist es möglich, die Temperatur des Wasserbades 13 so einzustellen, dass eine Taupunkttemperatur der gesättigten Luft sehr genau eingestellt werden kann. Eine Leistung des Befeuchters 10 kann über eine Regelung einer Fördermenge an Luft über die Pumpe der Belüftungsvorrichtung 17 in Kombination mit der eingestellten Taupunkttemperatur gegebenenfalls sehr genau geregelt werden. Zur Absenkung einer Taupunkttemperatur der Luft kann beispielsweise die Heizeinrichtung 15 mit der Belüftungseinrichtung 23 abgeschaltet und die Kühleinrichtung 16 mit der Belüftungseinrichtung 24 angeschaltet werden, sodass eine Temperatur des Wasserbades 13 und damit eine Taupunkttemperatur der Luft sinkt.

Prinzipiell ist es auch möglich, den Befeuchter 10 in Art eines drucklosen Dampfbefeuchters zu nutzen. So kann das Wasserbad 13 mittels der Heizwendel 19 bis zu einem Siedepunkt des Wassers erwärmt werden, wobei dann der so erzeugte Dampf über den Luftkanal 29 zu dem Prüfraum geleitet werden kann. Hierdurch kann eine sehr hohe Leistung des Befeuchters 10 realisiert werden. Diese Leistung kann noch weiter gesteigert werden, wenn während des Siedens die Pumpe der Belüftungsvorrichtung 17 aktiviert und über die Belüftungsvorrichtungen 23 beziehungsweise 24 Luft in das Wasserbad 13 eingeblasen wird. Ein so erhöhter Turbulenzgrad des Wasserbades 13 führt zu einem besseren Austreiben des erzeugten Dampfes aus dem Behälterinnenraum 12.

Der Befeuchter 10 umfasst mit der hier nicht dargestellten Regeleinrichtung einen ebenfalls nicht dargestellten Prüfkammerregelkreis und einen Befeuchterregelkreis mit Sensoren zur Messung von Temperatur und/oder relativer Luftfeuchte. Zur Feuchtregelung und/oder Temperaturregelung in dem Prüfraum ist der Prüfkammerregelkreis mit dem Befeuchterregelkreis im Rahmen einer Kaskadenregelung gekoppelt, wobei der Prüfkammerregelkreis als ein Führungsregler und der Befeuchterregelkreis als ein Folgeregler ausgebildet ist. Beispielsweise kann dann auch eine anfängliche Überhitzung des Wasserbades 13 erfolgen, wenn in dem Prüfraum schnell eine große Menge an gesättigter warmer Luft eingeleitet werden soll. Auch kann über die Regeleinrichtung eine Entfeuchtung des Prüfraums erfolgen, dadurch, dass sehr kalte gesättigte Luft in den Prüfraum eingeleitet wird. Diese sich dann im Prüfraum erwärmende Luft kann mit Wasser angereichert und über ein Überdruckventil des Prüfraums, gegebenenfalls auch zusammen mit im Prüfraum befindlichen Schadstoffen eines Prüflings, in eine Umgebung abgeführt werden.

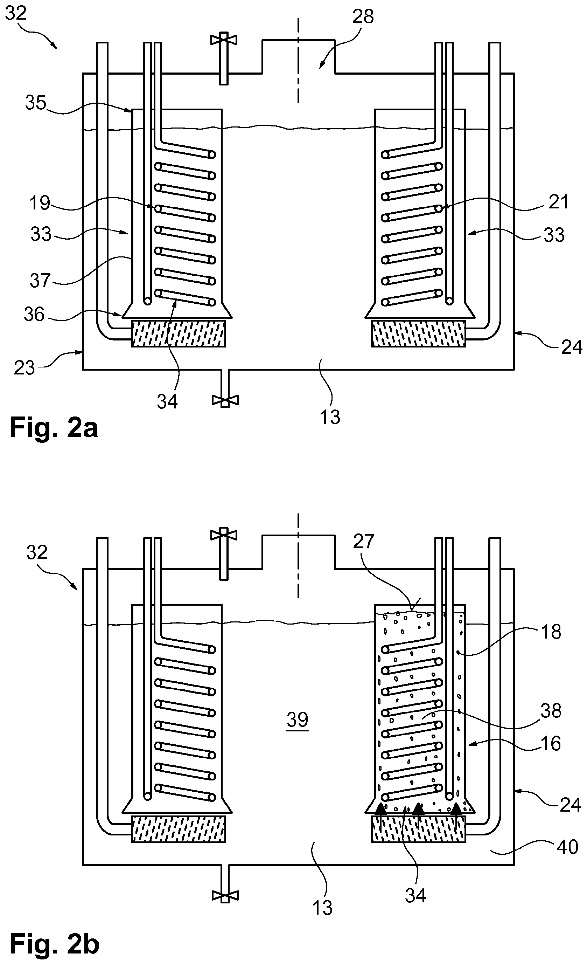

Eine Zusammenschau der **Fig. 2a** bis **2d** zeigt eine weitere Ausführungsform eines Befeuchters 32, wobei der Befeuchter 32 im Unterschied zu dem Befeuchter aus **Fig. 1** eine Strömungsvorrichtung 33 aufweist, die jeweils an der Heizwendel 19 und der Kühlwendel 21 angeordnet ist. Die Strömungsvorrichtung 33 bildet einen Kanal 34 mit einem oberen Ende 35 und einem unteren Ende 36, die jeweils offen ausgebildet sind, aus. Die Heizwendel 19 beziehungsweise die Kühlwendel 21 sind jeweils in dem Kanal 34 angeordnet. Der Kanal 34 wird hier von einem Rohr 37 ausgebildet, welches an dem unteren Ende 36 aufgeweitet ist. Das obere Ende 35 überragt den Wasserspiegel 27 ein Stück weit, beispielsweise wenige Zentimeter.

Wie aus der **Fig. 2b** hervorgeht, erfolgt auch hier, wie am Beispiel der Kühleinrichtung 16 gezeigt, eine Belüftung des Wasserbads 13 mit Luftblasen 18 über die Belüftungseinrichtung 24. Die Luftblasen 18 gelangen jedoch über das am unteren Ende 26 aufgeweitete Rohr 37 in den Kanal 34, sodass die Kühlwendel 21 von durch den Kanal 34 nach oben hin strömenden Luftblasen 18 innig umgeben ist. Folglich wird eine Teilwassermenge 38 einer Gesamtwassermenge 39 des Wasserbads 13 gezielt von den Luftblasen 18 durchströmt. Dies führt auch zur Anhebung des Wasserspiegels 27 in dem Rohr 37 im Vergleich zu einer Restwassermenge 40 des Wasserbads 13, welche nicht von Luftblasen 18 durchströmt wird. Die Teilwassermenge 38 wird mittels der Kühlwendel 21 in gewünschter Weise temperiert, sodass hier keine Temperierung der Gesamtwassermenge 39 notwendig ist, um gesättigte Luft mit der gewünschten Taupunkttemperatur zu erzeugen. Da die Teilwassermenge 38 um ein Vielfaches kleiner ist wie die Restwassermenge 40 beziehungsweise die Gesamtwassermenge 39, kann die Teilwassermenge 38 auch wesentlich schneller temperiert werden wie die Gesamtwassermenge 39, sodass mit Hilfe der Strömungsvorrichtung 33 der Befeuchter 32 energiesparend und mit einem möglichen dynamischen Temperaturwechsel bei der gleichen erzeugten Luftmenge im Vergleich zu dem Befeuchter aus **Fig. 1** betrieben werden kann.

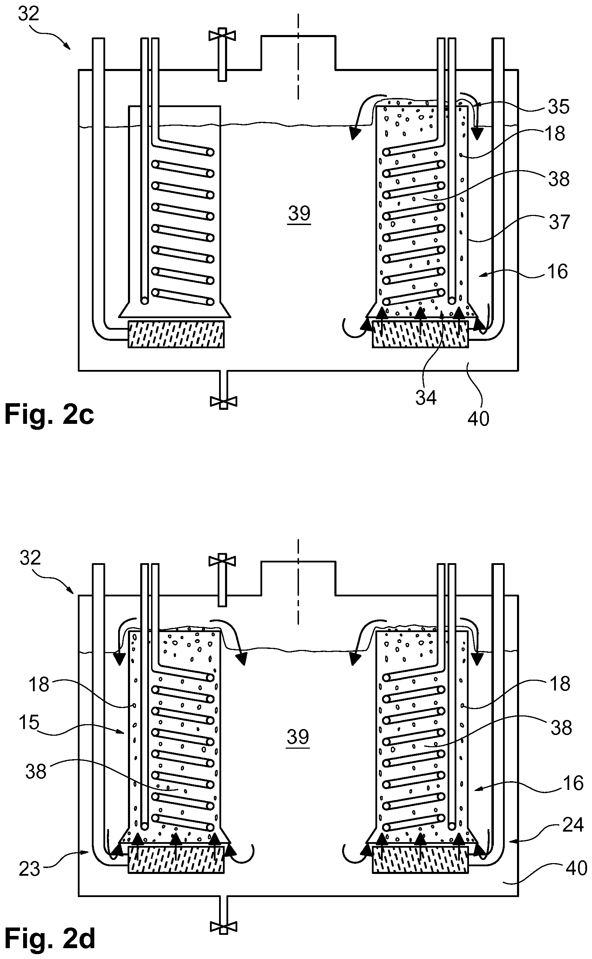

Wie aus der **Fig. 2c** zu entnehmen ist, kann eine Luftmenge der Belüftungseinrichtung 24 auch soweit erhöht werden, dass die Luftblasen 18 das Wasser der Teilwassermenge 38 über das obere Ende 35 des Rohrs 37 hinaus fördern und so eine Strömung in dem Rohr 37 ausbilden, die eine Durchmischung der Teilwassermenge 38 mit der Restwassermenge 40 bewirkt. Wenn beispielsweise eine Temperatur der Teilwassermenge 38 vergleichsweise niedrig und eine Temperatur der Restwassermenge 40 vergleichsweise hoch ist, kann so eine schnelle Angleichung beider Temperaturen und damit ein schneller Temperaturwechsel der Teilwassermenge 38 bewirkt werden. Dadurch wird es möglich, im Rahmen eines Prüfintervalls mit dem Befeuchter 32 innerhalb weniger Sekunden Luft mit Taupunkttemperaturen zu erzeugen, die wesentlich voneinander abweichen.

Die **Fig. 2d** zeigt den Befeuchter 32 während eines Betriebs der Belüftungseinrichtungen 23 und 24, sodass es hier zu einer vollständigen Durchmischung der Restwassermenge 40 mit den jeweiligen Teilwassermengen 38 kommt.

## Patentansprüche

1. Befeuchter (10, 32) für eine Prüfkammer, insbesondere Klimakammer, wobei der Befeuchter einen Behälter (11) mit einem Behälterinnenraum (12) zur Aufnahme eines Wasserbades (13), eine Heizeinrichtung (15) einer Temperiervorrichtung (14) zur Temperierung des Wasserbades, und eine Belüftungsvorrichtung (17) zur Erzeugung von Luftblasen (18) in dem Wasserbad, aufweist, wobei oberhalb des Wasserbades in dem Behälter eine Behälteröffnung (28) zur Verbindung des Behälterinnenraums mit einem Prüfraum einer Prüfkammer ausgebildet ist,
**dadurch gekennzeichnet,**
**dass** der Befeuchter eine Kühleinrichtung (16) der Temperiervorrichtung aufweist, wobei die Heizeinrichtung (15) und die Kühleinrichtung (16) jeweils mit einem in dem Wasserbad (13) angeordneten Wärmetauscher (19, 21) ausgebildet sind.

2. Befeuchter nach Anspruch 1,
**dadurch gekennzeichnet,**
**dass** der Heizeinrichtung (15) und der Kühleinrichtung (16) jeweils eine Belüftungseinrichtung (23, 24) der Belüftungsvorrichtung (17) räumlich zugeordnet ist.

3. Befeuchter nach Anspruch 2,
**dadurch gekennzeichnet,**
**dass** die jeweiligen Belüftungseinrichtungen (23, 24) eine Druckluftleitung (26) mit einem Luftauslass aufweisen, wobei jeweils eine poröse Membran (25) den Luftauslass ausbildet, wobei die poröse Membran jeweils unterhalb der Heizeinrichtung (15) und der Kühleinrichtung (16) angeordnet ist.

4. Befeuchter nach Anspruch 3,
**dadurch gekennzeichnet,**
**dass** die poröse Membran (25) scheibenförmig ausgebildet ist.

5. Befeuchter nach einem der Ansprüche 1 bis 4,
**dadurch gekennzeichnet,**
**dass** der Befeuchter (32) eine Strömungsvorrichtung (33) aufweist, wobei die Strömungsvorrichtung einen im Behälter (11) angeordneten Kanal (34) aufweist, dessen oberes Ende (35) und dessen unteres Ende (36) offen ausgebildet sind, wobei der Wärmetauscher (19, 21) in dem Kanal angeordnet ist.

6. Befeuchter nach Anspruch 5,
**dadurch gekennzeichnet,**
**dass** der Kanal (34) von einem Hohlprofil (37) ausgebildet ist, wobei eine Oberkante des oberen Endes oberhalb eines Wasserspiegels (27) des Wasserbades (13) angeordnet ist.

7. Befeuchter nach Anspruch 6,
**dadurch gekennzeichnet,**
**dass** der Wärmetauscher (19) der Heizeinrichtung (15) und der Wärmetauscher (21) der Kühleinrichtung (16) jeweils innerhalb des Hohlprofils (37) angeordnet ist.

8. Befeuchter nach einem der Ansprüche 5 bis 7,
**dadurch gekennzeichnet,**
**dass** der Kanal (34) derart ausgebildet und Belüftungseinrichtungen (23, 24) der Belüftungsvorrichtung (17) jeweils innerhalb oder unterhalb des Kanals angeordnet sind, dass ein Aufsteigen von Luftblasen (18) in dem Wasserbad (13) überwiegend, bevorzugt ausschließlich, innerhalb des Kanals erfolgt.

9. Befeuchter nach einem der vorangehenden Ansprüche,
**dadurch gekennzeichnet,**
**dass** der Befeuchter (10, 32) einen Füllstandssensor, ein Zulaufventil und ein Ablaufventil aufweist.

10. Prüfkammer zur Konditionierung von Luft, umfassend einen gegenüber einer Umgebung verschließbaren und temperaturisolierten Prüfraum zur Aufnahme von Prüfgut, sowie einen Befeuchter (10, 32) nach einem der vorangehenden Ansprüche.

11. Prüfkammer nach Anspruch 10,
**dadurch gekennzeichnet,**
**dass** der Befeuchter (10, 32) eine Regeleinrichtung mit einem Prüfkammerregelkreis und einem Befeuchterregelkreis aufweist, wobei der Prüfkammerregelkreis einen Feuchtesensor zur Messung einer relativen Luftfeuchte in dem Prüfraum aufweist und zur Feuchteregelung in dem Prüfraum dient, wobei der Befeuchterregelkreis einen Temperatursensor zur Messung der Temperatur in dem Wasserbad (13) und/oder einen Feuchtesensor, bevorzugt einen Taupunktsensor, zur Messung einer relativen Luftfeuchte in dem Behälterinnenraum (12) aufweist, und zur Feuchteregelung und/oder Temperaturregelung in dem Behälterinnenraum dient, wobei die Regeleinrichtung als eine Kaskadenregelung mit dem Prüfkammerregelkreis als ein Führungsregler und dem Befeuchterregelkreis als ein Folgeregler ausgebildet ist.

12. Verfahren zur Konditionierung von Luft eines Prüfraums einer Prüfkammer, insbesondere Klimakammer, mit einem Befeuchter (10, 32), wobei in einem Behälterinnenraum (12) eines Behälters (11) des Befeuchters ein Wasserbad (13) aufgenommen wird, wobei mittels einer Heizeinrichtung (15) einer Temperiervorrichtung (14) des Befeuchters eine Temperierung des Wasserbades erfolgt, wobei mittels einer Belüftungsvorrichtung (17) des Befeuchters Luftblasen (18) in dem Wasserbad erzeugt werden, wobei oberhalb des Wasserbades eine in dem Behälter ausgebildete Behälteröffnung (38) den Behälterinnenraum mit einem Prüfraum einer Prüfkammer verbindet,
**dadurch gekennzeichnet,**
**dass** mittels einer Kühleinrichtung (16) der Temperiervorrichtung des Befeuchters eine Temperierung des Wasserbades erfolgt, wobei die Heizeinrichtung (15) und die Kühleinrichtung (16) jeweils mit einem in dem Wasserbad (13) angeordneten Wärmetauscher (19, 21) ausgebildet sind.

13. Verfahren nach Anspruch 12,
**dadurch gekennzeichnet,**
**dass** das Wasserbad (13) mittels der Heizeinrichtung (15) und der Kühleinrichtung (16) in einem Temperaturbereich von 2 °C bis 100 °C, bevorzugt von 10 °C bis 100 °C temperiert wird.

14. Verfahren nach Anspruch 12 oder 13,
**dadurch gekennzeichnet,**
**dass** ein Wärmetauscher (19) der Heizeinrichtung (15) und ein Wärmetauscher (21) der Kühleinrichtung (16) jeweils in einem Kanal (34) einer Strömungsvorrichtung (33) des Befeuchters (32) in dem Wasserbad (13) angeordnet sind, wobei innerhalb des jeweiligen Kanals eine Teilwassermenge (38) einer Gesamtwassermenge (39) des Wasserbades mittels des jeweiligen Wärmetauschers temperiert wird.

15. Verfahren nach Anspruch 14,
**dadurch gekennzeichnet,**
**dass** die Teilwassermenge (38) mit einer von einer Restwassermenge (40) der Gesamtwassermenge (39) abweichenden Temperatur temperiert wird.

16. Verfahren nach Anspruch 14 oder 15,
**dadurch gekennzeichnet,**
**dass** die Luftblasen (18) innerhalb eines Hohlprofils (37) des Kanals (34) in dem Wasserbad (13) aufsteigen, wobei eine Oberkante des Hohlprofils oberhalb eines Wasserspiegels (27) des Wasserbades angeordnet ist.

17. Verfahren nach Anspruch 16,
**dadurch gekennzeichnet,**
**dass** die Luftblasen (18) in der Teilwassermenge (38) aufsteigen und den Wasserspiegel (27) innerhalb des Hohlprofils (37) relativ zu dem Wasserspiegel außerhalb des Hohlprofils erhöhen.

18. Verfahren nach Anspruch 16 oder 17,
**dadurch gekennzeichnet,**
**dass** die Luftblasen (18) in der Teilwassermenge (38) aufsteigen und die Teilwassermenge über die Oberkante des Hohlprofils (37) aus dem Hohlprofil hinaus fördern, derart, dass eine Mischung der Teilwassermenge mit einer Restwassermenge (40) der Gesamtwassermenge (39) erfolgt.

19. Verfahren nach einem der Ansprüche 12 bis 18,
**dadurch gekennzeichnet,**
**dass** aerosolfreie Luft, bevorzugt gesättigte aerosolfreie Luft, in einem Temperaturbereich von 2 °C bis 100 °C, bevorzugt von 10 °C bis 100 °C mittels der Temperiervorrichtung (14) und der Belüftungsvorrichtung (17) erzeugt und durch die Behälteröffnung (28) zu dem Prüfraum gefördert wird.

20. Verfahren nach einem der Ansprüche 12 bis 18,
**dadurch gekennzeichnet,**
**dass** der Prüfraum über ein geöffnetes Überdruckventil in dem Prüfraum entfeuchtet wird, wobei aerosolfreie Luft in einem Temperaturbereich von 2 °C bis 30 °C, bevorzugt von 2 °C bis 10 °C mittels der Temperiervorrichtung (14) und der Belüftungsvorrichtung (17) erzeugt und durch die Behälteröffnung (28) zu dem Prüfraum gefördert wird.

21. Verfahren nach einem der Ansprüche 12 bis 18,
**dadurch gekennzeichnet,**
**dass** aerosolhaltige Luft mittels des Wärmetauschers (19) der Heizeinrichtung (15) durch Sieden der Teilwassermenge (38) mittels der Temperiervorrichtung (14) und der Belüftungsvorrichtung (17) erzeugt und durch die Behälteröffnung (28) zu dem Prüfraum gefördert wird.

22. Verfahren nach einem der Ansprüche 12 bis 21,
**dadurch gekennzeichnet,**
**dass** eine Luftströmung von dem Behälterinnenraum (12) zu dem Prüfraum mittels einer von der Belüftungsvorrichtung (17) erzeugten Partialdruckdifferenz zwischen dem Behälterinnenraum und dem Prüfraum ausgebildet wird.

23. Verfahren nach einem der Ansprüche 12 bis 22,
**dadurch gekennzeichnet,**
**dass** eine Luftströmung von dem Behälterinnenraum (12) zu dem Prüfraum in dem Prüfraum an einen im Prüfraum befindlichen Ventilator eingeleitet wird.

## Claims

1. A humidifier (10, 32) for a test chamber, in particular a climate chamber, said humidifier comprising a container (11) having a container interior (12) for receiving a water bath (13), a heating device (15) of a temperature-control system (14) for controlling the temperature of the water bath, and a ventilation system (17) for generating air bubbles (18) in the water bath, a container opening (28) being formed in the container above the water bath in order to connect the container interior to a test space of a test chamber,
**characterized in that**
the humidifier comprises a cooling device (16) of the temperature-control system, the heating device (15) and the cooling device (16) each having a heat exchanger (19, 21) arranged in the water bath (13).

2. The humidifier according to claim 1,
**characterized in that**
a ventilation device (23, 24) of the ventilation system (17) is allocated spatially to the heating device (15) and the cooling device (16), respectively.

3. The humidifier according to claim 2,
**characterized in that**
the respective ventilation devices (23, 24) comprise a compressed-air line (26) having an air outlet, a porous membrane (25) forming the air outlet in each instance and being arranged below the heating device (15) and the cooling device (16), respectively.

4. The humidifier according to claim 3,
**characterized in that**
the porous membrane (25) is disc-shaped.

5. The humidifier according to any one of the claims 1 to 4,
**characterized in that**
the humidifier (32) comprises a flow system (33) comprising a duct (34) arranged in the container (11), an upper end (35) of the duct (34) and a lower end (36) of the duct (34) being open, the heat exchanger (19, 21) being arranged in the duct.

6. The humidifier according to claim 5,
**characterized in that**
the duct (34) is formed by a hollow profile (37), an upper edge of the upper end being arranged above a water level (27) of the water bath (13).

7. The humidifier according to claim 6,
**characterized in that**
the heat exchanger (19) of the heating device (15) and the heat exchanger (21) of the cooling device (16) are each arranged within the hollow profile (37).

8. The humidifier according to any one of the claims 5 to 7,
**characterized in that**
ventilation devices (23, 24) of the ventilation system (17) are each arranged within or below the duct and the duct (34) is realized such that air bubbles (18) in the water bath (13) mostly, preferably exclusively, rise within the duct.

9. The humidifier according to any one of the preceding claims,
**characterized in that**
the humidifier (10, 32) comprises a filling level sensor, a supply valve and a discharge valve.

10. A test chamber for conditioning air, comprising a temperature-insulated test space for receiving test materials which can be sealed against an environment as well as a humidifier (10, 32) according to any one of the preceding claims.

11. The test chamber according to claim 10,
**characterized in that**
the humidifier (10, 32) comprises a control device having a test-chamber control circuit and a humidifier control circuit, said test-chamber control circuit comprising a humidity sensor for measuring a relative air humidity in the test space and serving for controlling the humidity in the test space, said humidifier control circuit comprising a temperature sensor for measuring the temperature in the water bath (13) and/or a humidity sensor, preferably a dew point sensor, for measuring a relative air humidity in the container interior (12) and serving for controlling the humidity and/or temperature in the container interior, said control device being realized as a cascading control having the test-chamber control circuit as a guiding controller and the humidifier control circuit as a follow-up controller.

12. A method for conditioning air of a test space of a test chamber, in particular a climate chamber, using a humidifier (10, 32), a water bath (13) being received in a container interior (12) of a container (11) of the humidifier, the temperature of the water bath being controlled by means of a heating device (15) of a temperature-control system (14) of the humidifier, air bubbles (18) being generated in the water bath by means of a ventilation system (17) of the humidifier, a container opening (38), which is formed in the container, connecting the container interior to a test space of a test chamber above the water bath,
**characterized in that**
the temperature of the water bath is controlled by means of a cooling device (16) of the temperature-control system of the humidifier, the heating device (15) and the cooling device (16) each having a heat exchanger (19, 21) arranged in the water bath (13).

13. The method according to claim 12,
**characterized in that**
the temperature of the water bath (13) is controlled at a temperature ranging from 2 °C to 100 °C, preferably 10 °C to 100 °C, by means of the heating device (15) and the cooling device (16).

14. The method according to claim 12 or 13,
**characterized in that**
a heat exchanger (19) of the heating device (15) and a heat exchanger (21) of the cooling device (16) are each arranged in the water bath (13) in a duct (34) of a flow system (33) of the humidifier (32), a partial amount of water (38) of a total amount of water (39) of the water bath being controlled in temperature within the respective duct by means of the respective heat exchanger.

15. The method according to claim 14,
**characterized in that**
the partial amount of water (38) is controlled in temperature by means of a temperature deviating from a residual amount of water (40) of the total amount of water (39).

16. The method according to claim 14 or 15,
**characterized in that**
the air bubbles (18) rise in the water bath (13) within a hollow profile (37) of the duct (34), an upper edge of the hollow profile being arranged above a water level (27) of the water bath.

17. The method according to claim 16,
**characterized in that**
the air bubbles (18) rise in the partial amount of water (38) and increase the water level (27) within the hollow profile (37) with respect to the water level outside of the hollow profile.

18. The method according to claim 16 or 17,
**characterized in that**
the air bubbles (18) rise in the partial amount of water (38) and convey the partial amount of water out of the hollow profile over the upper edge of the hollow profile (37) in such a manner that the partial amount of water is mixed with a residual amount of water (40) of the total amount of water (39).

19. The method according to any one of the claims 12 to 18,
**characterized in that**
the aerosol-free air, preferably satiated aerosol-free air, is generated at a temperature ranging from 2 °C to 100 °C, preferably 10 °C to 100 °C, by means of the temperature-control system (14) and the ventilation system (17) and is conveyed through the container opening (28) to the test space.

20. The method according to any one of the claims 12 to 18,
**characterized in that**
the test space is dehumidified via an open positive-pressure valve in the test space, aerosol-free air being generated at a temperature ranging from 2 °C to 30 °C, preferably 2 °C to 10 °C, by means of the temperature-control system (14) and the ventilation system (17) and being conveyed through the container opening (28) to the test space.

21. The method according to any one of the claims 12 to 18,
**characterized in that**
aerosol-containing air is generated by means of the heat exchanger (19) of the heating device (15) by boiling the partial amount of water (38) by means of the temperature-control system (14) and the ventilation system (17) and is conveyed through the container opening (28) to the test space.

22. The method according to any one of the claims 12 to 21,
**characterized in that**
an air flow from the container interior (12) to the test space is realized between the container interior and the test space by means of a difference in partial pressure generated by the ventilation system (17).

23. The method according to any one of the claims 12 to 22,
**characterized in that**
an air flow from the container interior (12) to the test space is introduced into the test space at a ventilator arranged in the test space.

## Revendications

1. Humidificateur (10, 32) pour une chambre d'essai, notamment une chambre climatique, ledit humidificateur comprenant un réservoir (11) ayant un intérieur de réservoir (12) pour recevoir un bain d'eau (13), un dispositif chauffant (15) d'un système (14) de régulation de température pour réguler la température du bain d'eau, et un système de ventilation (17) pour générer des bulles d'air (18) dans le bain d'eau, une ouverture de réservoir (28) étant formée dans le réservoir au-dessus le bain d'eau afin de relier l'intérieur de réservoir à un espace d'essai d'une chambre d'essai,
**caractérisé en ce que**
l'humidificateur comprend un refroidisseur (16) du système de régulation de température, le dispositif chauffant (15) et le refroidisseur (16) ayant chacun un échangeur de chaleur (19, 21) disposé dans le bain d'eau (13).

2. Humidificateur selon la revendication 1,
**caractérisé en ce**
**qu'**un dispositif de ventilation (23, 24) du système de ventilation (17) est associé spatialement au dispositif chauffant (15) et au refroidisseur (16) à chaque fois.

3. Humidificateur selon la revendication 2,
**caractérisé en ce que**
les dispositifs de ventilation (23, 24) correspondants comprennent une conduite d'air comprimé (26) ayant une sortie d'air, une membrane (25) poreuse formant la sortie d'air à chaque fois et étant disposée au-dessous le dispositif chauffant (15) et le refroidisseur (16), respectivement.

4. Humidificateur selon la revendication 3,
**caractérisé en ce que**
la membrane (25) poreuse est réalisée en forme de disque.

5. Humidificateur selon l'une quelconque des revendications 1 à 4,
**caractérisé en ce que**
l'humidificateur (32) comprend un système d'écoulement (33) comprenant un conduit (34) disposé dans le réservoir (11), une extrémité supérieure (35) du conduit (34) et une extrémité inférieure (36) du conduit (34) étant ouvertes, l'échangeur de chaleur (19, 21) étant disposé dans le conduit.

6. Humidificateur selon la revendication 5,
**caractérisé en ce que**
le conduit (34) est formé par un profilé creux (37), un bord supérieur de l'extrémité supérieure étant disposé au-dessus d'un niveau d'eau (27) du bain d'eau (13).

7. Humidificateur selon la revendication 6,
**caractérisé en ce que**
l'échangeur de chaleur (19) du dispositif chauffant (15) et l'échangeur de chaleur (21) du refroidisseur (16) sont chacun disposés dans le profilé creux (37).

8. Humidificateur selon l'une quelconque des revendications 5 à 7,
**caractérisé en ce que**
des dispositifs de ventilation (23, 24) du système de ventilation (17) sont chacun disposés dans ou au-dessous le conduit (34) et le conduit est réalisé de telle manière que des bulles d'air (18) dans le bain d'eau (13) montent en majorité, de préférence exclusivement, dans le conduit.

9. Humidificateur selon l'une quelconque des revendications précédentes,
**caractérisé en ce que**
l'humidificateur (10, 32) comprend un capteur de niveau, une vanne d'amenée et une vanne de vidange.

10. Chambre d'essai pour la climatisation de l'air, comprenant un espace d'essai avec une isolation thermique qui sert à recevoir du matériau d'essai et qui peut être fermé contre un environnement ainsi qu'un humidificateur (10, 32) selon l'une quelconque des revendications précédentes.

11. Chambre d'essai selon la revendication 10,
**caractérisé en ce que**
l'humidificateur (10, 32) comprend un dispositif de régulation ayant un circuit de réglage de la chambre d'essai et un circuit de réglage de l'humidificateur, ledit circuit de réglage de la chambre d'essai comprenant un capteur d'humidité pour mesurer une humidité relative de l'air dans l'espace d'essai et servant à réguler l'humidité dans l'espace d'essai, ledit circuit de réglage de l'humidificateur comprenant un capteur de température pour mesurer la température dans le bain d'eau (13) et/ou un capteur humidité, de préférence un capteur de point de condensation, pour mesurer une humidité relative de l'air dans l'intérieur de réservoir (12) et servant à réguler l'humidité et/ou la température dans l'intérieur de réservoir, ledit dispositif de régulation étant réalisé comme régulation en cascade ayant le circuit de réglage de la chambre d'essai comme régulateur de guidage et le circuit de réglage de l'humidificateur comme régulateur de suivi.

12. Procédé pour la climatisation de l'air d'un espace d'essai d'une chambre d'essai, notamment une chambre climatique, en utilisation d'un humidificateur (10, 32), un bain d'eau (13) étant reçu dans un intérieur (12) d'un réservoir (11) de l'humidificateur, la température du bain d'eau étant régulée au moyen d'un dispositif chauffant (15) d'un système (14) de régulation de température de l'humidificateur, des bulles d'air (18) étant générées dans le bain d'eau au moyen d'un système de ventilation (17) de l'humidificateur, une ouverture de réservoir (38), qui est formée dans le réservoir, reliant l'intérieur de réservoir à un espace d'essai d'une chambre d'essai au-dessus du bain d'eau,
**caractérisé en ce que**
la température du bain d'eau est régulée au moyen d'un refroidisseur (16) du système de régulation de température de l'humidificateur, le dispositif chauffant (15) et le refroidisseur (16) ayant chacun un échangeur de chaleur (19, 21) disposé dans le bain d'eau (13).

13. Procédé selon la revendication 12,
**caractérisé en ce que**
la température du bain d'eau (13) est régulée dans une plage de température allant de 2 °C à 100 °C, de préférence de 10 °C à 100 °C, au moyen du dispositif chauffant (15) et du refroidisseur (16).

14. Procédé selon la revendication 12 ou 13,
**caractérisé en ce**
**qu'**un échangeur de chaleur (19) du dispositif chauffant (15) et un échangeur de chaleur (21) du refroidisseur (16) sont disposés chacun dans le bain d'eau (13) dans un conduit (34) du système d'écoulement (33) de l'humidificateur (32), un montant partiel (38) de l'eau d'un montant total (39) de l'eau du bain d'eau étant régulé en température dans le conduit correspondant au moyen de l'échangeur de chaleur correspondant.

15. Procédé selon la revendication 14,
**caractérisé en ce que**
le montant partiel (38) de l'eau est régulé en température au moyen d'une température différant d'un montant résiduel (40) de l'eau du montant total (39) de l'eau.

16. Procédé selon la revendication 14 ou la revendication 15,
**caractérisé en ce que**
les bulles d'air (18) montent dans le bain d'eau (13) dans un profilé creux (37) du conduit (34), un bord supérieur du profilé creux étant disposé au-dessus d'un niveau d'eau (27) du bain d'eau.

17. Procédé selon la revendication 16,
**caractérisé en ce que**
les bulles d'air (18) montent dans le montant partiel (38) de l'eau et augmente le niveau d'eau (27) dans le profilé creux (37) par rapport au niveau d'eau en dehors du profilé creux.

18. Procédé selon la revendication 16 ou la revendication 17,
**caractérisé en ce que**
les bulles d'air (18) montent dans le montant partiel (38) de l'eau et sortent le montant partiel de l'eau du profilé creux par le bord supérieur du profilé creux (37) de telle manière que le montant partiel de l'eau est mélangé avec un montant résiduel (40) de l'eau du montant total (39) de l'eau.

19. Procédé selon l'une quelconque des revendications 12 à 18,
**caractérisé en ce que**
l'air sans aérosol, de préférence de l'air saturé sans aérosol, est généré dans une plage de température allant de 2 °C à 100 °C, de préférence de 10 °C à 100 °C, au moyen du système (14) de régulation de température et du système de ventilation (17) et est débité à travers l'ouverture de réservoir (28) à l'espace d'essai.

20. Procédé selon l'une quelconque des revendications 12 à 18,
**caractérisé en ce que**
l'espace d'essai est déshumidifié par une soupape de surpression ouverte dans l'espace d'essai, de l'air sans aérosol étant généré dans une plage de température allant de 2 °C à 30 °C, de préférence de 2 °C à 10 °C, au moyen du système (14) de régulation de température et du système de ventilation (17) et étant débité à travers l'ouverture de réservoir (28) à l'espace d'essai.

21. Procédé selon l'une quelconque des revendications 12 à 18,
**caractérisé en ce que**
de l'air contenant aérosol est généré au moyen de l'échangeur de chaleur (19) du dispositif chauffant (15) en bouillant le montant partiel (38) de l'eau au moyen du système (14) de régulation de température et du système de ventilation (17) et est débité à travers l'ouverture de réservoir (28) à l'espace d'essai.

22. Procédé selon l'une quelconque des revendications 12 à 21,
**caractérisé en ce**
**qu'**un écoulement d'air de l'intérieur de réservoir (12) à l'espace d'essai est réalisé entre l'intérieur de réservoir et l'espace d'essai au moyen d'une différence de pression partielle générée par le système de ventilation (17).

23. Procédé selon l'une quelconque des revendications 12 à 22,
**caractérisé en ce**
**qu'**un écoulement d'air de l'intérieur de réservoir (12) à l'espace d'essai est introduit dans l'espace d'essai à un ventilateur disposé dans l'espace d'essai.
